(19) Europäisches Patentamt
European Patent Office
Office européen des brevets

(11) **EP 3 248 282 B1**

(12) **EUROPÄISCHE PATENTSCHRIFT**

(45) Veröffentlichungstag und Bekanntmachung des Hinweises auf die Patenterteilung:
**29.01.2020  Patentblatt 2020/05**

(21) Anmeldenummer: **16703774.6**

(22) Anmeldetag: **09.02.2016**

(51) Int Cl.:
**H02P 21/12** *(2016.01)*

(86) Internationale Anmeldenummer:
**PCT/EP2016/052672**

(87) Internationale Veröffentlichungsnummer:
**WO 2016/155922 (06.10.2016 Gazette 2016/40)**

(54) **VERFAHREN ZUR GERÄUSCHREDUZIERUNG EINES ELEKTRISCHEN MOTORS**

METHOD FOR REDUCING NOISE OF AN ELECTRIC MOTOR

PROCÉDÉ DE RÉDUCTION DE BRUITS D'UN MOTEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2015  DE 102015205691**

(43) Veröffentlichungstag der Anmeldung:
**29.11.2017  Patentblatt 2017/48**

(73) Patentinhaber: **Siemens Aktiengesellschaft 80333 München (DE)**

(72) Erfinder:
• **KÖLLENSPERGER, Peter 90425 Nürnberg (DE)**
• **TSOUMAS, Ioannis 8032 Zürich (CH)**

(56) Entgegenhaltungen:
EP-A1- 2 684 623      DE-A1- 3 343 202
DE-A1- 10 254 940     DE-A1- 10 336 068
DE-A1-102010 009 056  DE-A1-102010 049 169
US-A1- 2008 018 190

**Beschreibung**

Die Erfindung betrifft ein Verfahren zur Reduzierung von Geräuschen eines durch einen Umrichter gespeisten Motors. Die Erfindung betrifft weiter eine Regelvorrichtung zur Reduzierung von solchen Geräuschen eines durch einen Umrichter gespeisten Motors sowie ein Antriebssystem mit einer solchen Regelvorrichtung, einem Umrichter und einem Motor.

Ein wesentlicher Anteil der von Motoren abgestrahlten Geräusche ist elektromagnetischen Ursprungs. Dabei werden Radialkraftwellen bei Motoren durch Oberwellen des magnetischen Flusses innerhalb des Motors erzeugt, die durch die nichtsinusförmige Verteilung der Ständer- und Läuferwicklung sowie durch die Schwankungen des Luftspalts wegen der Ständer- und Läufernutung entstehen.

Die Radialkraftwellen regen das Blechpaket an. Es entstehen Schwingungen, die als Körperschall übertragen werden und sich über das umgebende Gehäuse als Geräusch ausbreiten. Das Gehäuse wirkt als Übertragungselement und verstärkt den Pegel des abgestrahlten Geräusches im Bereich seiner Eigenfrequenzen.

Um die Motorgeräusche zu reduzieren wird üblicherweise versucht, entweder das mechanische Design des Motors zu verändern bzw. zu optimieren oder durch das Modulationsverfahren umrichterbedingte Zeitharmonische zu minimieren, sowie umrichterbedingte Zeitharmonische mit Frequenzen in der Nähe von Resonanzstellen des Motors zu vermeiden.

Die DE10336068 offenbart einen umrichtergespeisten Motor mit Flussregelung.

Der Erfindung liegt die Aufgabe zugrunde, Motorgeräusche von umrichtergespeisten Motoren weiter zu reduzieren.

Diese Aufgabe wird durch ein Verfahren nach Anspruch 1 gelöst.

Diese Aufgabe wird weiter durch eine Regelvorrichtung nach Anspruch 8 gelöst. Die Aufgabe wird weiter durch ein Antriebssystem gelöst, das eine solche Regelvorrichtung, einen Umrichter und einen Motor umfasst.

Vorteilhafte Ausgestaltungen der Erfindung sind in den abhängigen Ansprüchen angegeben.

Der Erfindung liegt die Erkenntnis zugrunde, dass bei drehzahlveränderbaren Antrieben, die von Umrichtern gespeist werden, zusätzlich zu den oben bereits genannten Radialkraftwellen weitere Kraftwellen entstehen. Die Radialkraftwellen, die eine Geräuschentwicklung verursachen, werden durch die Wechselwirkung der Grundschwingung des magnetischen Flusses mit seinen Zeitharmonischen verursacht. Maßgeblich für die Geräuschentwicklung eines Motors bei Umrichterbetrieb ist das Produkt der Grundschwingung des magnetischen Flusses mit der oder den Oberschwingungen des magnetischen Flusses. Letztere hängt bzw. hängen von Parametern ab, die sich aus der Umrichtermodulation ergeben, wie zum Beispiel der Modulationsart (Pulsmuster), dem Aussteuergrad und der Pulsfrequenz.

Um die Entstehung umrichterbedingter Radialkraftwellen theoretisch genauer zu erklären, wird der vereinfachte Fall angenommen, dass zur Erzeugung des magnetischen Flusses in der Ständerspannung die Grundschwingung und zwei Oberschwingungen vorhanden sind. In diesem Fall wird der Raumzeiger der Ständerspannung mit folgender Gleichung beschrieben

$$\vec{u} = \vec{u}_1 + \vec{u}_{h1} + \vec{u}_{h2} =$$

$$U_1 \cdot e^{j(\omega_1 t + \varphi_1)} + U_{h1} \cdot e^{j(\omega_{h1} t + \varphi_{h1})} + U_{h2} \cdot e^{-j(\omega_{h2} t + \varphi_{h2})}\,.$$

Die magnetische Flussdichte im Luftspalt eines Asynchronmotors kann als rotierender Vektor dargestellt werden. Unter Annahme der Ständerspannung aus ist die magnetische Flussdichte

$$\vec{B} = \vec{B}_1 + \vec{B}_{h1} + \vec{B}_{h2} =$$

$$-jB_1 \cdot e^{j(\omega_1 t + \varphi_1)} - jB_{h1} \cdot e^{j(\omega_{h1} t + \varphi_{h1})} + jB_{h2} \cdot e^{-j(\omega_{h2} t + \varphi_{h2})}$$

mit $B_1 \sim \dfrac{U_1}{\omega_1}$ und $B_{h1,2} \sim \dfrac{U_{h1,2}}{\omega_{h1,2}}$. Die Projektion des Drehzeigers $\vec{B}$ auf die Achse am Ort $p\varphi_x$ liefert die magnetische Induktionsverteilung $B(t, \varphi_x)$ entlang dem Luftspalt der Maschine:

$$B(t, \varphi_x) = Re[\vec{B} \cdot e^{-jp\varphi_x}] = B_1 \cdot \sin[\omega_1 t + \varphi_1 - p\varphi_x] + B_{h1} \cdot \sin[\omega_{h1} t + \varphi_{h1} - p\varphi_x]$$

$$+ B_{h2} \cdot \sin[\omega_{h2} t + \varphi_{h2} + p\varphi_x]\,.$$

Die radiale Zugspannung (Radialzugkraft pro Flächeneinheit) im Luftspalt ist proportional zum Quadrat des magnetischen Flusses

$$\sigma(t,\varphi_x) = \frac{B^2(t,\varphi_x)}{2\mu_0}.$$

Unter der Annahme, dass die Amplitude der Oberschwingungen viel kleiner als die Grundschwingungsamplitude ist, führt diese Gleichung zu

$$\sigma(t,\varphi_x) \approx \frac{B_1^2(t,\varphi_x)}{2\mu_0} + \frac{B_1(t,\varphi_x)}{\mu_0} \cdot \left(B_{h1}(t,\varphi_x) + B_{h2}(t,\varphi_x)\right).$$

welches mit Hilfe der oben genannten Zusammenhänge folgendes ergibt:

$$\sigma(t,\varphi_x) = \frac{B_1^2}{2\mu_0}[1 - \cos(2\omega_1 t + 2\varphi_1 - 2p\varphi_x)] +$$

$$+ \frac{B_1 B_{h1}}{\mu_0}\begin{pmatrix} \cos[(\omega_{h1}-\omega_1)t + \varphi_{h1} - \varphi_1] - \\ cos[(\omega_{h1}+\omega_1)t + \varphi_{h1} + \varphi_1 - 2p\varphi_x] \end{pmatrix} +$$

$$+ \frac{B_1 B_{h2}}{\mu_0}\begin{pmatrix} \cos[(\omega_{h2}-\omega_1)t + \varphi_{h2} - \varphi_1 + 2p\varphi_x] - \\ -cos[(\omega_{h2}+\omega_1)t + \varphi_{h2} + \varphi_1] \end{pmatrix}.$$

Diese Gleichung zeigt das Vorhandensein zweier pulsierender Komponenten mit den Frequenzen $\omega_{h1}$-$\omega_1$, $\omega_{h2}$+$\omega_1$ und zweier rotierender Komponenten mit Frequenzen $\omega_{h1}$+$\omega_1$, $\omega_{h2}$-$\omega_1$. Die räumliche Ordnung der rotierenden Komponenten ist gleich 2p, mit p als Polpaarzahl. Wie in dieser Gleichung zu sehen ist, kann man die Amplitude dieser Komponente reduzieren, indem er die Amplituden der Oberschwingungen $B_{h1}$ und $B_{h2}$ oder die Amplitude der Grundharmonische $B_1$ reduziert.

Eine Veränderung der Grundschwingung des magnetischen Flusses wird durch eine Veränderung des flussbildenden Stroms erzeugt. Bei dem flussbildenden Strom handelt es sich um einen Blindstrom. Die Grundschwingung des magnetischen Flusses kann auch durch das Verhältnis von Motorspannung zu Motorfrequenz approximiert werden.

Erfindungsgemäß wird eine Veränderung der Oberschwingungen des magnetischen Flusses im Motor durch einen veränderten Aussteuergrad, auch als Modulationsgrad bezeichnet, bewirkt. Dieser veränderte Aussteuergrad kann derart gewählt werden, dass dieser geringere Oberschwingungen im magnetischen Fluss des Motors verursacht. Es hat sich gezeigt, dass dieser Effekt dazu genutzt werden kann, das Produkt von Grundschwingung und Oberschwingung des magnetischen Flusses im Motor so zu reduzieren, dass und die Geräusche eines durch einen Umrichter gespeisten Motors verringert werden. Eine weitere erfindungsgemäße Möglichkeit, Oberschwingungen des magnetischen Flusses und damit entstehende Geräusche zu reduzieren, besteht darin, die Pulsfrequenz zu verändern.

Somit lassen sich durch eine Veränderung des magnetischen Flusses im Motor die Geräusche, die durch den Motor erzeugt werden, reduzieren. So kann beispielsweise eine Reduzierung der Grundschwingung des Flusses für Teillastbetrieb dazu führen, dass das Produkt aus Grundschwingung und Oberschwingung bzw. Oberschwingungen des magnetischen Flusses einen kleineren Wert annehmen und somit die Geräusche des Motors reduziert werden. Bisher wurde die Reduzierung der Grundschwingung des Flusses nur zur Verringerung von Motorverlusten im Teillastbetrieb genutzt. Im Gegensatz zur Verringerung der Verlustleistung kann neben einer Flussabsenkung auch eine Erhöhung des magnetischen Flusses und der damit verbundenen Erhöhung des Aussteuergrades je nach Arbeitspunkt des Motors und/oder Umrichters zu einer Geräuschreduktion führen. Die Erhöhung des Flusses ist insbesondere dann möglich, wenn der Motor über entsprechende Auslegungsreserven verfügt, so dass das Eisen bei einer Erhöhung des magnetischen Flusses nicht in Sättigung geht. Darüber hinaus kann zur Geräuschreduktion die Pulsfrequenz erhöht werden, wenn eine Flusserhöhung den Motorstrom reduziert.

Als Umrichter können dabei Umrichter eingesetzt werden, die einen Zwischenkreis aufweisen und eine Eingangsspannung zunächst in eine Gleichspannung im Zwischenkreis umwandeln bevor diese wieder in eine Wechselspannung zur Speisung des Motors umgewandelt wird. Ebenfalls sind auch Direktumrichter für die Anwendung des erfindungsgemäßen Verfahrens geeignet, bei denen keine Gleichspannung erzeugt wird.

Das erfindungsgemäße Verfahren ist für alle Arten von umrichtergespeisten Motoren, insbesondere für Asynchronmaschinen und Synchronmaschinen, durchführbar.

Bei einer vorteilhaften Ausgestaltung der Erfindung wird der magnetische Fluss im Motor in Abhängigkeit von einem Lastmoment am Motor verändert. Es hat sich für das Verfahren als besonders vorteilhaft herausgestellt, die Veränderung des magnetischen Flusses dann vorzunehmen, wenn der Motor und/oder Umrichter sich unterhalb seiner maximalen Leistungsfähigkeit befindet. Dieser Zustand wird auch als Teillastbetrieb bezeichnet. Die sich dann ergebenen Freiheitsgrade, wie beispielsweise thermische Reserven, können dann zu einer Geräuschreduktion genutzt werden, die nicht notwendigerweise die Gesamtverluste des Motors und/oder Umrichters erhöhen. Allerdings kann eine Erhöhung der Verluste in Umrichter und/oder Motor zugunsten einer geringeren Geräuschemission toleriert werden.

Bei einer vorteilhaften Ausgestaltung der Erfindung wird das Lastmoment aus Ausgangsströmen des Umrichters ermittelt. Da diese Größen und das mathematische Modell des Motors der Umrichterregelung bekannt sind, können diese auch auf einfache Weise zur Reduktion der Motorgeräusche genutzt werden. Dazu wird die Reduktion der Motorgeräusche mittels der Veränderung des Flusses durch die Umrichterregelung selbst vorgenommen. Da dieser die erforderlichen Werte der Umrichterausgangsströme bekannt sind, kann auf einfache Weise auch die Flussveränderung vorgenommen werden. Dabei können in vorteilhafter Weise auch weitere Größen, die den Zustand des Umrichters beschreiben, für die Regelung herangezogen werden.

Alternativ kann die Veränderung des Flusses auch durch eine separate Regelvorrichtung vorgegeben werden. Entsprechende Werte, wie beispielsweise die Umrichterausgangsströme und/ oder Flusssollwerte, werden dann zwischen der Umrichterregelung und der separaten Regelvorrichtung übertragen.

Bei einer vorteilhaften Ausgestaltung der Erfindung wird in Abhängigkeit von der Drehzahl des Motors mittels der Spannung und/oder des Stromes am Motor der magnetische Fluss verändert. Dabei kann die Drehzahl mittels einer geeigneten Messvorrichtung, wie beispielsweise einem Drehzahlgeber vom Motor ermittelt werden. Ebenso ist es möglich, aus Größen, die dem Umrichter und seiner Umrichterregelung bekannt sind, wie beispielsweise der Ausgangsspannung oder dem Ausgangsstrom, auf die Drehzahl des Motors zu schließen. Dies kann im einfachen Fall aus der Frequenz einer dieser Größen geschehen. Diese Frequenz unterscheidet sich von der Motordrehzahl im Falle einer Asynchronmaschine durch den Schlupf. Für die Durchführung des Verfahrens hat sich jedoch gezeigt, dass der Wert der Frequenz bereits hinreichend genau ist. Alternativ kann aus den Größen der Umrichterregelung sowie einem entsprechenden Motormodell die Drehzahl des Motors berechnet werden.

Bei einer bekannten Lastcharakteristik, bei der das Moment an der Motorwelle im Wesentlichen von der Drehzahl abhängt, kann auf eine Ermittlung des Lastmomentes des Motors verzichtet werden. Aus einem Drehzahlsignal können hinreichend genau die Lastverhältnisse und damit auch der Betriebszustand des Motors und/oder Umrichters bestimmt werden, um entsprechende Maßnahmen zur Flussveränderung vornehmen zu können, ohne den Motor in unzulässige Betriebszustände, wie beispielsweise Überlastung oder Sättigung zu betreiben.

Bei einer vorteilhaften Ausgestaltung der Erfindung wird das Lastmoment mittels einer Kennlinie in Abhängigkeit von der Drehzahl des Motors ermittelt. Besondere Lastmaschinen wie Pumpen oder Verdichter haben eine bestimmte Charakteristik, die sich in Form einer Kennlinie angeben lässt. Mit Hilfe dieser Kennlinie und der entsprechenden Motor- oder Lastdrehzahl kann das Lastmoment des Motors genau bestimmt werden. Daraus lässt sich der Betriebszustand des Motors und/oder Umrichters derart ermitteln um eine entsprechende Flussveränderung zur Geräuschreduzierung vorzunehmen.

Die Kennlinie kann dabei offline ermittelt werden und in einer Regeleinrichtung hinterlegt werden. Alternativ oder ergänzend kann die Kennlinie auch während des Betriebs des Motors ermittelt und gegebenenfalls gespeichert werden.

Bei einer vorteilhaften Ausgestaltung der Erfindung wird die Pulsfrequenz des Umrichters verändert. Im Teillastbereich kann eine verbleibende Leistungsfähigkeit des Umrichters dazu genutzt werden, die Pulsfrequenz zu erhöhen. Diese Maßnahme verursacht zwar mehr Verluste im Umrichter. Allerdings können diese bei verbleibender Leistungsfähigkeit des Umrichters, beispielsweise im Teillastbereich oder durch eine entsprechend größere Auslegung des Umrichters, für eine Erhöhung der Pulsfrequenz genutzt werden. Daneben kann auch im Volllastbetrieb beispielsweise eine Flusserhöhung vorgenommen werden, sofern der Motor dadurch nicht in Sättigung geht. Die damit einhergehende Absenkung der Motorströme kann für eine Erhöhung der Pulsfrequenz genutzt werden. Dies wirkt sich in eine Verringerung der Oberschwingungen des magnetischen Flusses aus, so dass auch die entstehenden Geräusche reduziert werden. Da die verbleibende Leistungsfähigkeit unter anderem auch vom Lastmoment des Motors abhängt, hat es sich als günstig erwiesen, auch die Erhöhung der Pulsfrequenz in Abhängigkeit vom Lastmoment des Motors vorzunehmen.

Eine höhere Pulsfrequenz bewirkt eine bessere Angleichung der Ströme an einen sinusförmigen Zeitverlauf. Dadurch lassen sich Oberschwingungen im Strom und damit im magnetischen Fluss des Motors reduzieren. Die damit einhergehenden höheren Verluste des Umrichters können zugunsten von niedrigeren Geräuschen des Motors toleriert werden.

Bei einer vorteilhaften Ausgestaltung der Erfindung wird die Zwischenkreisspannung des Umrichters verändert. Das Verhältnis zwischen Ausgangsspannung des Umrichters und Zwischenkreisspannung wird als Aussteuergrad des Umrichters bezeichnet. Je nach Aussteuergrad und Pulsfrequenz werden unterschiedlich hohe Oberschwingungen in der Ausgangsspannung und damit auch im Ausgangsstrom erzeugt, der den magnetischen Fluss im Motor bewirkt.

Durch die Veränderung der Zwischenkreisspannung, sowohl einer Erhöhung als auch einer Reduzierung, wird bei gleicher Ausgangsspannung des Umrichters der Aussteuergrad verändert. Durch eine geeignete Veränderung der Zwischenkreisspannung kann somit ein Aussteuergrad durch den Umrichter bzw. seiner Umrichterregelung eingestellt werden, der nur ein geringes Maß an Oberschwingungen erzeugt. Dieser Aussteuergrad trägt damit zur Geräuschreduzierung des Motors bei.

Im Folgenden wird die Erfindung anhand der in den Figuren dargestellten Ausführungsbeispiele näher beschrieben und erläutert. Es zeigen:

FIG 1    einen Querschnitt durch einen Motor

FIG 2    den Aufbau eines Antriebssystems

FIG 3    den Aufbau eines Antriebssystems mit Regelung

FIG 4    die Abhängigkeit der Oberschwingungen der Radialzugkraft $\sigma$ in verschiedenen Frequenzbereichen (Vielfachheit der Pulsfrequenz) vom Aussteuergrad a für ein typisches Modulationsverfahren (Raumzeigermodulation) und

FIG 5    ein Ausführungsbeispiel für die Veränderung von magnetischem Fluss, Pulsfrequenz und Zwischenkreisspannung in Abhängigkeit von der Motordrehzahl.

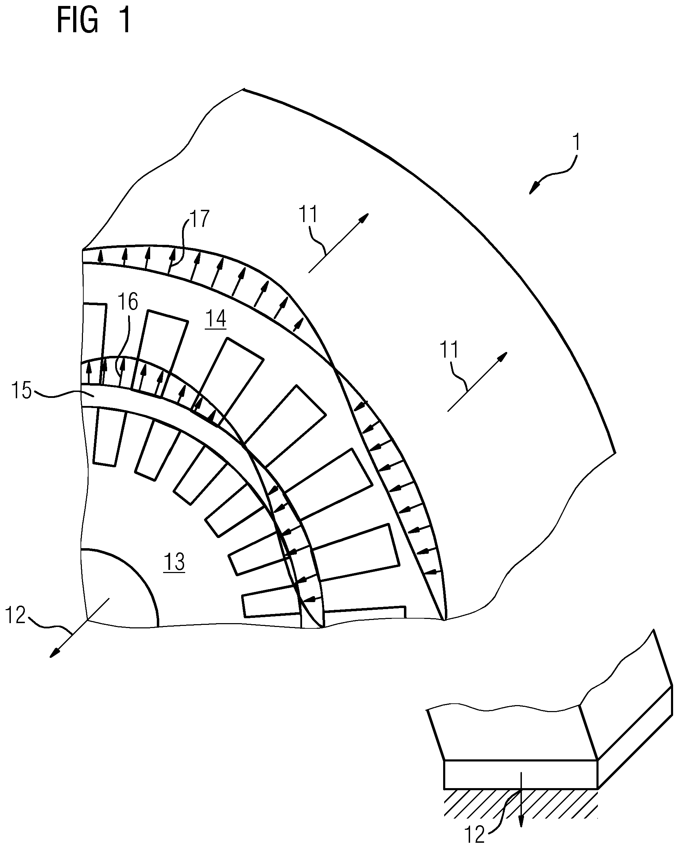

FIG 1 zeigt Ausschnitte eines Querschnitts durch den Motor 1. Der Motor 1 weist einen Ständer 14 und einen Läufer 13 auf. Zwischen Ständer 14 und Läufer 13 befindet sich der Luftspalt 15. Die Radialzugkraft 16 ist mit seiner Grundschwingung und seinen Oberschwingungen in Form von Pfeilen in dieser Figur dargestellt. Diese Verteilung der Radialzugkraft 16 über den Umfang hinweg verursacht eine Radialverformung 17 des Ständers 14. Die zeitliche Veränderung der Radialzugkraft 16 im Motor 1 bewirkt eine zeitliche Veränderung der Radialverformung 17. Die Radialverformung 17 führt somit zu einem Vibrieren des Motorgehäuses, so dass sowohl Luftschall 11 als auch Körperschall 12 entstehen, welche als Geräusche wahrgenommen werden können. Die Radialverformung 17 geht vom Ständerblechpaket des Ständers 14 auf das Gehäuse des Motors 1 über und verbreitet sich dort als Luftschall 11 über die Luft. Falls kein Gehäuse vorhanden ist, so geht die Radialverformung 17 direkt vom Ständerblechpaket als Luftschall 11 in die Luft über. Der Körperschall 12 wird zum einen über die Befestigung des Motors 1 als auch über die Motorwelle übertragen.

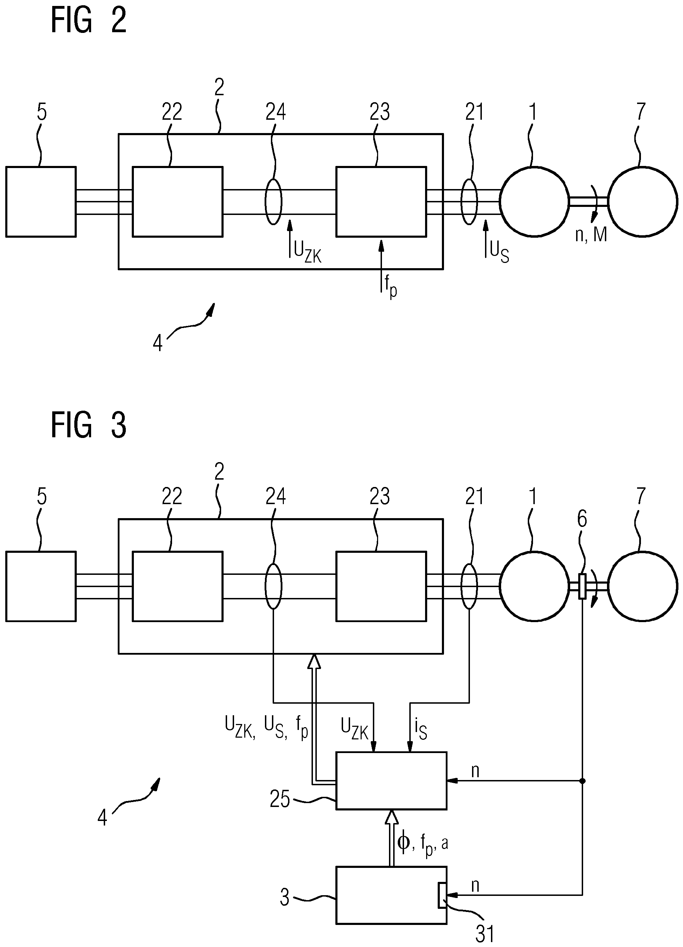

FIG 2 zeigt den Aufbau eines Antriebssystems 4. Dieses Antriebssystem 4 weist ein Energieversorgungsnetz 5, einen Umrichter 2, einen Motor 1 sowie eine an den Motor 1 angeschlossene Last 7 auf. Der Umrichter 2 ist dreiphasig mit dem Energieversorgungsnetz 5 verbunden. Der Motor 1 ist dreiphasig mit dem Ausgang des Umrichters 2 verbunden. Die Last 7 ist über die Motorwelle mit dem Motor 1 verbunden. Der Umrichter 2 weist einen Gleichrichter 22 und einen Wechselrichter 23 auf. Der Gleichrichter 22 und der Wechselrichter 23 sind über den Zwischenkreis 24 miteinander verbunden. Der Gleichrichter 22 hat die Aufgabe, die Wechselspannung des Energieversorgungsnetzes 5 in eine Gleichspannung umzuwandeln. Aus dieser Gleichspannung wird durch den Wechselrichter 23 am Ausgang des Umrichters 2 eine Spannung $U_s$ erzeugt. Alternativ, in diesem Ausführungsbeispiel nicht dargestellt, kann auch die Umwandlung der Spannung des Energieversorgungsnetzes direkt in die Ausgangsspannung des Umrichters ohne Verwendung eines Zwischenkreises vorgenommen werden. Diese Art von Umrichtern wird als Direktumrichter bezeichnet. Auch für diese ist das erfindungsgemäße Verfahren anwendbar. Mit Hilfe von Amplitude und Frequenz der Spannung Us wird am Motor 1 der gewünschte Arbeitspunkt eingestellt. Eine entsprechende Umrichterregelung 25, welche die Arbeitspunkteinstellung vornimmt und Abweichungen korrigiert, ist in der FIG 2 der Übersichtlichkeit halber nicht dargestellt. Eine weitere charakteristische Größe für den Umrichter 2, insbesondere den Wechselrichter 23, ist die Pulsfrequenz $f_p$ mit der der Wechselrichter 23 seine in dieser Figur nicht explizit dargestellten Schalter derart schaltet, beispielsweise unter Verwendung einer Pulsweitenmodulation, um die entsprechende Spannung $U_s$ am Ausgang des Umrichters 2 zu erzeugen. Durch die Spannung $U_s$ werden Ausgangsströme 21 des Umrichters 2 generiert, die im Motor 1 sowohl den magnetischen Fluss $\Phi$ als auch das Drehmoment M erzeugen. Dieses Drehmoment M wird über eine Welle an die Last 7 übertragen. Ziel einer hier nicht näher dargestellten Umrichterregelung 25 ist es, beispielsweise Drehzahl n und Moment M des Motors 1 zu regeln, um einen stabilen Arbeitspunkt zu erreichen.

FIG 3 zeigt den Aufbau eines Antriebssystems 4 einschließlich einer Umrichterregelung 25 sowie einer Regelvorrichtung 3 zur Veränderung des magnetischen Flusses $\Phi$ und/oder der Pulsfrequenz $f_p$ und/oder der Zwischenkreisspannung $U_{ZK}$. Zur Vermeidung von Wiederholungen wird auf die Beschreibung zur FIG 2 sowie auf die dort eingeführten Bezugszeichen verwiesen. Zusätzlich zu den Komponenten, die in FIG 2 dargestellt sind, weist das Antriebssystem 4 der FIG 3 ein Mittel 6 zur Erfassung der Drehzahl n auf. Das Signal zur Drehzahl n wird von dem Mittel 6 zur Erfassung der Drehzahl n an die Umrichterregelung 25 und an den Eingang 31 der Regelvorrichtung 3 übertragen.

Die Regelvorrichtung 25 kann sowohl im Umrichter 2 als auch außerhalb des Umrichters 2 angeordnet sein. Die Regelvorrichtung 3 kann ebenfalls im Umrichter 2 oder außerhalb des Umrichters 2 angeordnet sein. Darüber hinaus kann die Regelvorrichtung 3 auch in die Umrichterregelung 25 integriert werden und somit einen Teil der Umrichterregelung 25 darstellen. Die Aufgabe der Umrichterregelung 25 ist es, einen Sollwert für die Ausgangsspannung des Umrichters 2 zu erzeugen. Dazu können insbesondere Größen wie die Zwischenkreisspannung $U_{ZK}$, die Ausgangsströme des Stromrichters 21 $i_S$ und die Drehzahl n des Stromrichters herangezogen werden. Die Regelvorrichtung 3 dient darüber hinaus zur Reduzierung der vom Motor 1 verursachten Geräusche. Dazu wird in Abhängigkeit von der Drehzahl n der Sollwert des magnetischen Flusses $\Phi$ derart verändert, dass die Geräusche des Motors 1 reduziert werden. Wie bereits beschrieben, geschieht wird dies dadurch vorgenommen, dass der magnetische Fluss $\Phi$ derart eingestellt wird, dass die Grundschwingung des magnetischen Flusses multipliziert mit den Oberschwingungen des magnetischen Flusses $\Phi$ einen möglichst geringen Wert annehmen. Darüber hinaus können die Pulsfrequenz $f_p$ sowie die Zwischenkreisspannung $U_{ZK}$ derart verändert werden, dass auch diese das oben beschriebene Produkt aus Grundschwingung und Oberschwingung des magnetischen Flusses reduzieren. Dazu werden entsprechende Sollwerte von der Regelvorrichtung 3 an die Umrichterregelung 25 übertragen. Die Umrichterregelung 25 kann dann durch den Zugriff auf die Schalthandlungen der Schalter (Leistungshalbleiter) des Wechselrichters 23 den entsprechenden Arbeitspunkt mit verändertem magnetischen Fluss $\Phi$ und gegebenenfalls mit veränderter Pulsfrequenz $f_p$ einstellen. Durch den Zugriff auf die Schalthandlungen des Gleichrichters 22 kann eine veränderte Zwischenkreisspannung $U_{ZK}$ eingestellt werden. Somit kann durch den Umrichter 2 eine Veränderung des magnetischen Flusses $\Phi$, der Pulsfrequenz $f_p$ und der Zwischenkreisspannung $U_{ZK}$ vorgenommen werden. Diese Eingriffsmöglichkeit verändert die entsprechenden physikalischen Größen im Motor 1 und Umrichter 2.

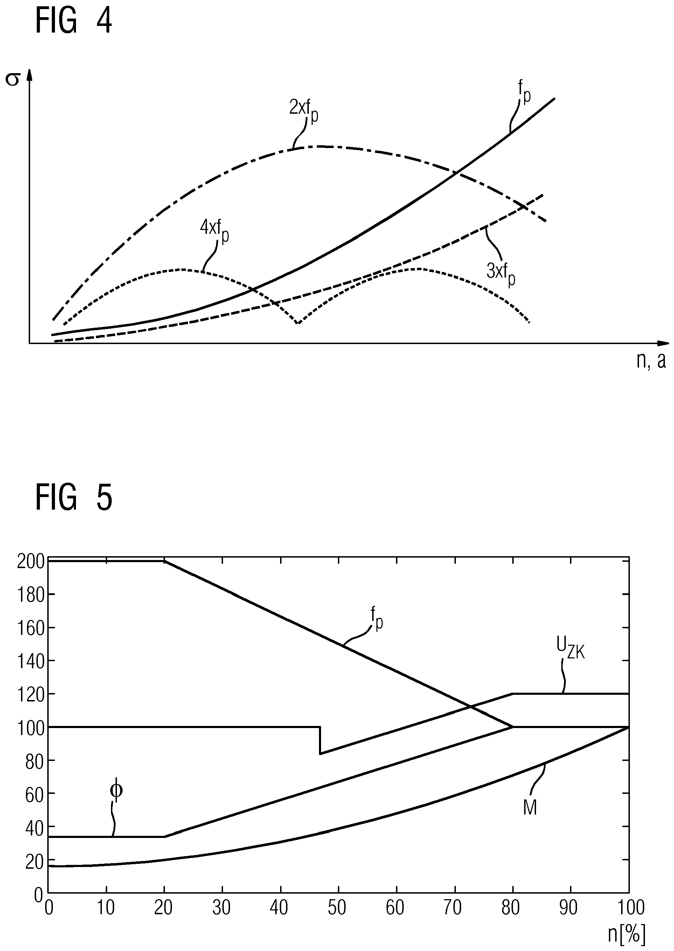

FIG 4 zeigt den Zusammenhang zwischen den Oberschwingungen der Radialzugkraft $\sigma$ in verschiedenen Frequenzbereichen (Vielfachen der Pulsfrequenz) vom Aussteuergrad a für ein übliches Modulationsverfahren (Raumzeigermodulation). Dabei sind, zumindest bis zur Nenndrehzahl, Aussteuergrad a und Drehzahl n proportional zueinander. Oberhalb der Nenndrehzahl setzt dann die Feldschwächung ein. Man erkennt, dass abhängig vom Aussteuergrad verschiedene Oberschwingungen an den Vielfachen der Pulsfrequenz verstärkt oder geschwächt werden. Dabei existieren Frequenzbereiche, in denen eine Erhöhung des Aussteuergrads (durch z.B. Verminderung der Zwischenkreisspannung) eine Reduktion der Oberschwingungen der Radialzugkraft $\sigma$ bewirkt (z.B. für die Oberschwingungen an der doppelten Pulsfrequenz). Wenn z.B. der Motor 1 im Bereich der doppelten Pulsfrequenz empfindlich ist, soll der Aussteuergrad a erhöht werden, um eine Geräuschreduktion zu bewirken. Wenn der Motor im Bereich der einfachen Pulsfrequenz empfindlich ist, soll der Aussteuergrad a so niedrig wie möglich gehalten werden. Damit einher geht auch eine Reduktion der Geräuschentwicklung des Motors 1.

FIG 5 zeigt ein Ausführungsbeispiel für das Verfahren zur Reduzierung von Geräuschen eines Motors 1. Bei dieser Anwendung ist das Lastmoment M in Abhängigkeit von der Drehzahl n bekannt. Aufgrund des relativ geringen Drehmoments M bei geringen Drehzahlen n wird der Fluss $\Phi$ bei geringen Drehzahlen abgesenkt. Erst bei hohen Drehzahlen erreicht er seinen 100%-Wert. Der mit dem niedrigen magnetischen Fluss $\Phi$ einhergehende kleinere Strom gibt darüber hinaus die Möglichkeit, die Pulsfrequenz $f_p$ zu erhöhen, ohne den Umrichter 2 zu überlasten, insbesondere thermisch zu überlasten. In dem Ausführungsbeispiel beträgt die Pulsfrequenz bei kleinen Drehzahlen 200%. Mit steigender Last und damit auch höheren Verlusten, sowohl in Umrichter 2 als auch Motor 1, wird die Pulsfrequenz $f_p$ wieder reduziert. Bei Maximaldrehzahl, in der auch das maximale Moment M durch den Motor geliefert werden muss, befinden sich sowohl der magnetische Fluss $\Phi$ als auch die Pulsfrequenz $f_p$ auf den Nominalwert von 100%. Darüber hinaus kann wie hier in diesem Ausführungsbeispiel dargestellt, auch die Zwischenkreisspannung $U_{ZK}$ über die Drehzahl n derart angepasst werden, um eine Geräuschreduktion des Motors 1 zu erzielen.

**Patentansprüche**

1. Verfahren zur Reduzierung von Geräuschen eines durch einen Umrichter (2) gespeisten Motors (1), wobei der magnetische Fluss ($\Phi$) im Motor (1) derart verändert wird, dass das Produkt von Grundschwingung des magnetischen Flusses ($\Phi$) mit einer Oberschwingung des magnetischen Flusses ($\Phi$) reduziert wird, wobei zur Veränderung der Oberschwingungen des magnetischen Flusses ($\Phi$) der Aussteuergrad und/oder die Pulsfrequenz ($f_p$) des Umrichters (2) verändert wird.

2. Verfahren nach Anspruch 1, wobei der magnetische Fluss ($\Phi$) im Motor (1) in Abhängigkeit von einem Lastmoment (M) am Motor (1) verändert wird.

3. Verfahren nach einem der Ansprüche 1 oder 2, wobei das Lastmoment (M) aus Ausgangsströmen (21) des Umrichters (2) ermittelt wird.

4. Verfahren nach einem der Ansprüche 1 bis 3, wobei in Abhängigkeit von der Drehzahl (n) des Motors (1) mittels der Spannung ($U_S$) und/oder des Stromes ($i_S$) am Motor (1) der magnetische Fluss ($\Phi$) im Motor (1) verändert wird.

# EP 3 248 282 B1

**5.** Verfahren nach Anspruch 4, wobei das Lastmoment (M) mittels einer Kennlinie in Abhängigkeit von der Drehzahl (n) des Motors (1) ermittelt wird.

**6.** Verfahren nach einem der Ansprüche 1 bis 5, wobei der Aussteuergrad derart erhöht wird, dass sich der magnetische Fluss (Φ) erhöht..

**7.** Verfahren nach einem der Ansprüche 1 bis 6, wobei die Zwischenkreisspannung ($U_{ZK}$) des Umrichters (2) verändert wird.

**8.** Regelvorrichtung (3) zur Reduzierung von Geräuschen eines durch einen Umrichter (2) gespeisten Motors (1), die eingerichtet ist, ein Verfahren nach einem der Ansprüche 1 bis 6 auszuführen, wobei die Regelvorrichtung (3) mit dem Umrichter (2) derart verbindbar ist, dass ein Sollwert für den magnetischen Fluss (Φ) des Motors (1) übertragbar ist und dass ein Sollwert für die Pulsfrequenz ($f_p$) und/oder für die Zwischenkreisspannung ($U_{ZK}$) übertragbar ist.

**9.** Regelvorrichtung (3) nach Anspruch 8, wobei die Regelvorrichtung (3) einen Eingang (31) aufweist, dem ein Signal über die Drehzahl (n) des Motors (1) zuführbar ist.

**10.** Antriebssystem (4) aufweisend

- eine Regelvorrichtung (3) nach einem der Ansprüche 8 bis 9,
- einen Umrichter (2) und
- einen Motor (1),

wobei der Motor (1) mittels des Umrichters (2) mit einem Energieversorgungsnetz (5) verbindbar ist, wobei die Regelvorrichtung (3) mit dem Umrichter (2) derart verbunden ist, um mindestens einen Sollwert an den Umrichter (2) zu übertragen und wobei die Regelvorrichtung (3) mit einem Mittel (6) zur Erfassung der Drehzahl (n) des Motors (1) verbunden ist.

## Claims

**1.** Method for reducing the noise of a motor (1) fed by a converter (2), wherein the magnetic flux (Φ) in the motor (1) is changed such that the product of the fundamental oscillation of the magnetic flux (Φ) and a harmonic oscillation of the magnetic flux (Φ) is reduced, wherein the degree of control and/or the pulse frequency ($f_p$) of the converter (2) are changed in order to change the harmonic oscillations of the magnetic flux (Φ).

**2.** Method according to claim 1, wherein the magnetic flux (Φ) in the motor (1) is changed as a function of a load torque (M) on the motor (1).

**3.** Method according to one of claims 1 or 2, wherein the load torque (M) is determined from output currents (21) of the converter (2).

**4.** Method according to one of claims 1 to 3, wherein the magnetic flux (Φ) in the motor (1) is changed as a function of the rotational speed (n) of the motor (1) by means of the voltage ($U_s$) and/or the current ($i_s$) on the motor (1).

**5.** Method according to claim 4, wherein the load torque (M) is determined by means of a characteristic curve as a function of the rotational speed (n) of the motor (1).

**6.** Method according to one of claims 1 to 5, wherein the degree of control is increased such that the magnetic flux (Φ) increases.

**7.** Method according to one of claims 1 to 6, wherein the intermediate circuit voltage ($U_{ZK}$) of the converter (2) is changed.

**8.** Regulation device (3) for reducing the noise of a motor (1) fed by a converter (2), said regulation device being designed to carry out a method according to one of claims 1 to 6, wherein the regulation device (3) can be connected to the converter (2) such that a set point for the magnetic flux (Φ) of the motor (1) can be transmitted and that a set point for the pulse frequency ($f_p$) and/or for the intermediate circuit voltage ($U_{ZK}$) can be transmitted.

9. Regulation device (3) according to claim 8, wherein the regulation device (3) has one input (31) to which a signal can be supplied by way of the rotational speed (n) of the motor (1) .

10. Propulsion system (4) having

   - a regulation device (3) according to one of claims 8 to 9,
   - a converter (2) and
   - a motor (1),

   wherein the motor (1) can be connected to an energy supply network (5) by means of the converter (2), wherein the regulation device (3) is connected to the converter (2) so as to transmit at least one set point to the converter (2) and wherein the regulation device (3) is connected to a means (6) for detecting the rotational speed (n) of the motor (1).

**Revendications**

1. Procédé de réduction de bruits d'un moteur (1) alimenté par un convertisseur (2), le flux ($\theta$) magnétique du moteur (1) étant modifié de manière à réduire le produit de l'oscillation fondamentale du flux ($\theta$) magnétique par un harmonique du flux ($\theta$) magnétique, dans lequel, pour modifier les harmoniques du flux ($\theta$) magnétique, on modifie le degré de modulation et/ou la fréquence ($f_p$) des impulsions du convertisseur (2).

2. Procédé suivant la revendication 1, dans lequel on modifie le flux ($\theta$) magnétique du moteur (1) en fonction d'un couple (M) de charge du moteur (1).

3. Procédé suivant l'une des revendications 1 ou 2, dans lequel on détermine le couple (M) de charge à partir de courants (21) de sortie du convertisseur (2).

4. Procédé suivant l'une des revendications 1 à 3, dans lequel, en fonction de la vitesse (n) de rotation du moteur (1), on modifie le flux ($\theta$) magnétique du moteur (1) au moyen de la tension ($U_s$) et/ou du courant ($i_s$) du moteur (1).

5. Procédé suivant la revendication 4, dans lequel on détermine le couple (M) de charge au moyen d'une courbe caractéristique, en fonction de la vitesse (n) de rotation du moteur (1).

6. Procédé suivant l'une des revendications 1 à 5, dans lequel on augmente le degré de modulation de manière à augmenter le flux ($\theta$) magnétique.

7. Procédé suivant l'une des revendications 1 à 6, dans lequel on modifie la tension ($U_{zk}$) de circuit intermédiaire du convertisseur (2).

8. Système (3) de réglage pour réduire des bruits d'un moteur (1) alimenté par un convertisseur (2), qui est conçu pour effectuer un procédé suivant l'une des revendications 1 à 6, le système (3) de réglage pouvant être relié au convertisseur (2) de manière à pouvoir transmettre une valeur de consigne du flux ($\theta$) magnétique du moteur et de manière à pouvoir transmettre une valeur de consigne de la fréquence ($f_p$) des impulsions et/ou de la tension ($U_{zk}$) du circuit intermédiaire.

9. Système (3) de réglage suivant la revendication 8, dans lequel le système (3) de réglage a une entrée (31), à laquelle peut être envoyé un signal sur la vitesse (n) de rotation du moteur (1).

10. Système (4) d'entraînement, comportant

   - un système (3) de réglage suivant l'une des revendications 8 à 9,
   - un convertisseur (2) et
   - un moteur (1),

   dans lequel le moteur (1) peut être relié à un réseau (5) d'alimentation en électricité au moyen du convertisseur (2), dans lequel le système (3) de réglage est relié au convertisseur (2) de manière à transmettre au moins une valeur de consigne au convertisseur (2) et dans lequel le système (3) de réglage est relié à un moyen (6) de détection de la vitesse (n) de rotation du moteur (1).

FIG 1

FIG 2

5  22  2  24  23  21  1  7

$U_{ZK}$

$f_p$

$U_S$

n, M

4

FIG 3

5  22  2  24  23  21  1  6  7

$U_{ZK}, U_S, f_p$   $U_{ZK}$   $i_S$

n

25

4

$\phi, f_p, a$

3

n

31

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10336068